# EUROPÄISCHE PATENTSCHRIFT

(11) **EP 0 618 735 B1**
(45) Veröffentlichungstag und Bekanntmachung des Hinweises auf die Patenterteilung: **07.07.1999**
(21) Anmeldenummer: 94104958.7
(22) Anmeldetag: 29.03.1994
(51) Int. Cl.: H04N 7/14

(54) **Teilnehmergerät für Bildfernsprechen**
Subscriber device for videophone
Dispositif d'abonné pour vidéophone

(30) Priorität: 01.04.1993 DE 4310677
(43) Veröffentlichungstag der Anmeldung: 05.10.1994
(73) Patentinhaber: ALCATEL, 75008 Paris (FR)
(72) Erfinder: Heine, Bernhard, D-71229 Leonberg (DE)
(74) Vertreter: Schätzle, Albin, Dipl.-Phys.

(56) Entgegenhaltungen:
- EP-A- 0 309 341
- WO-A-92/13422
- DE-A- 3 600 914
- DE-U- 9 202 823
- NTZ NACHRICHTENTECHNISCHE ZEITSCHRIFT, Bd.38, Nr.10, Oktober 1985, BERLIN DE Seiten 698 - 703 B. KELLNER ET AL. 'BILDTELEFON MIT BLICKKONTAKT? - TECHNISCHE MÖGLICHKEITEN UND EMPIRISCHE UNTERSUCHUNGEN'

## Beschreibung

Die Erfindung betrifft ein Teilnehmergerät für Bildfernsprechen nach dem Oberbegriff des Anspruchs 1.

Ein derartiges Teilnehmergerät ist aus der DE 36 00 914 A1 bekannt. Es enthält in einem Gehäuse eine Videokamera und eine Bildwiedergabevorrichtung, wobei deren Strahlengänge zusammengefaßt an einem Spiegel auf der Oberseite des Standgehäuses zu einem Betrachter oder Benutzer reflektiert werden. Die Strahlen beider Vorrichtungen werden durch geeignete Spiegel so gelenkt, daß ihre Strahlenachsen vereint durch eine Öffnung in der Oberseite des Gehäuses auf den Spiegel gerichtet sind, die an der Innenseite einer Klappe, die über der Öffnung des Gehäuses angebracht ist, sitzt. Die Klappe ist an einem Gestänge befestigt, das eine Hubund Schwenkbewegung der Klappe gestattet. In der unteren Endstellung bedeckt die Klappe die Öffung des Gehäuses.

Durch die Verwendung eines halbdurchlässigen Spiegels ist es zwar möglich, die optischen Achsen von Videokamera und Bildwiedergabevorrichtung bezüglich eines Benutzers zu vereinigen, so daß eine störende Parallaxe gänzlich vermieden wird, doch muß für diesen Vorteil ein Lichtverlust hingenommen werden, der naturgemäß an dem halbdurchlässigen Spiegel eintritt, und zwar sowohl für die Reflexion als auch für die Transmission.

Es sind auch Teilnehmergeräte bekannt, die auf dem gleichen Prinzip basieren, jedoch nur einen Spiegel aufweisen, z.B. aus der DE 92 02 823 U1. Der halbdurchlässige Spiegel ist hierbei in der Klappe angeordnet, ebenso die Videokamera, die durch den Spiegel hindurch einen Benutzer aufnimmt, während dieser das Bild der Bildwiedergabevorrichtung im Spiegel betrachtet. Ein weiterer Spiegel ist nicht vorhanden, dadurch kann das Gerät einfacher, kleiner und billiger hergestellt werden.

Ferner ist aus der EP 0 309 341 A1 ein Bildtelefon bekannt, das zwei durch ein Gelenk verbundene Gehäuse hat, deren eines die Auflage auf einem Tisch bildet und die Schaltung sowie Bedienelemente enthält, während in dem anderen, hochschwenkbaren ein Monitor und eine Kamera untergebracht sind. Zusammengeklappt bilden beide Gehäuse ein kompaktes, quaderförmiges Gerät. Wird das obere Gehäuse um das an der Hinterkante liegende Gelenk aufgeschwenkt, so blickt ein Benutzer auf den nahe der Oberkante einseitig angeordneten Monitor. Unmittelbar daneben ist die Kamera aus Gründen der Raumersparnis um 90° gedreht eingebaut, so daß durch einen vor das Objektiv gesetzten Spiegel die Lichtstrahlen auf den Benutzer umgelenkt werden müssen. Durch Ändern der Neigung des oberen Gehäuses kann das Gerät auf Personen unterschiedlicher Größe ausgerichtet werden.

Der Erfindung liegt die Aufgabe zugrunde, ein handliches, kompaktes Teilnehmergerät für Bildfernsprechen der eingangs genannten Art zu schaffen, bei dem Lichtverluste durch halbdurchlässige Spiegel vermieden werden. Gelöst wird diese Aufgabe durch die im Anspruch 1 angegebenen Merkmale. Weitere Ausgestaltungen sind jeweils den Unteransprüchen zu entnehmen. Durch die angegebene Lösung werden nicht nur unerwünschte Lichtverluste vermieden, sondern durch die Verwendung gewöhnlicher Planspiegel kann die Ergonomie verbessert, der Aufbau wesentlich vereinfacht und das Gerät verbilligt werden, unter Beibehaltung der optimalen Strahlengangführung. Weitere Vorteile sind in der folgenden Beschreibung angeführt.

Die Erfindung wird anhand von Ausführungsbeispielen beschrieben, die in den zugehörigen Zeichnungen dargestellt sind.

Darin zeigen:
- Fig. 1: eine Ausführung eines Teilnehmergerätes für Bildfernsprechen, perspektivisch, und
- Fig. 2: die optisch-geometrischen Beziehungen des Gerätes nach Fig. 1

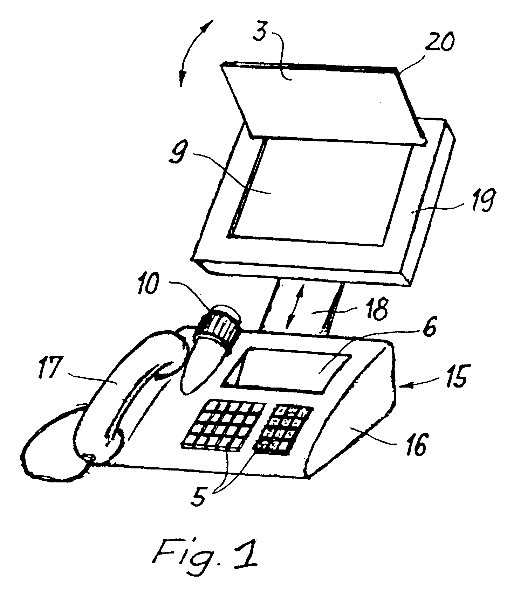

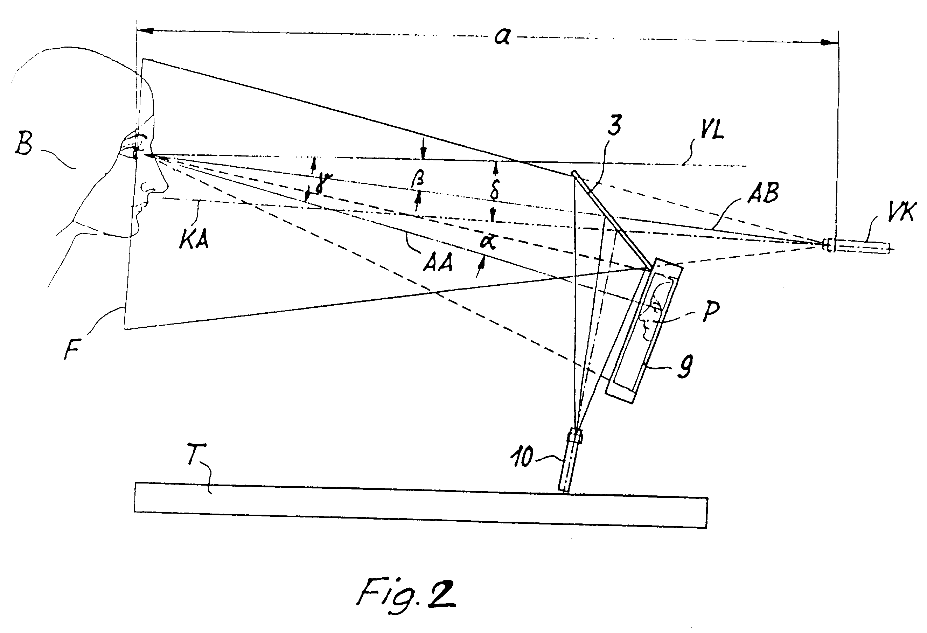

Bei dem Teilnehmergerät 15 nach Fig. 1 ist die Videokamera 10 im Gehäuse 16 des Gerätes eingebaut. Im übrigen sind die Teile mit folgenden Bezugszeichen versehen: Bedienelemente mit 5, Anzeigeelemente mit 6, der Spiegel mit 3, die Bildwiedergabevorrichtung mit 9 und die Videokamera mit 10. Bedien- und Anzeigeelemente 5 und 6 sind im Gehäuse 16 angeordnet, zusätzlich ein üblicher Handapparat 17. An der Rückseite des Gehäuses 16 ist mittels einer Stütze 18 ein Halterahmen 19 für die Bildwiedergabevorrichtung 9 derart befestigt, daß letztere über dem Gehäuse steht. Sie ist etwa 15° nach hinten geneigt, und steht damit senkrecht zur Blickrichtung AA eines Benutzers B (Fig. 2). Ferner kann sie entsprechend dem Pfeil auf der Stütze 18 nach oben und unten verschoben und so individuell vom Benutzer eingestellt werden.

Am oberen Rand der Bildwiedergabevorrichtung 9, die beispielsweise von einem 10-Zoll-LCD-Monitor gebildet wird, ist eine Klappe 20 am Halterahmen 19 angelenkt, auf deren Innenseite der Spiegel 3 befestigt ist. Heruntergeklappt schützt die Klappe 20 den Spiegel 3 und den Monitor 9, wenn nicht oder ohne Bild telefoniert wird. Hochgeklappt jedoch wird der Strahlengang der Videokamera 10 vom Spiegel 3 zum Benutzer B umgelenkt. Der Reflexionswinkel kann durch Schwenken der Klappe 20 (Pfeil) reguliert werden.

Fig. 2 zeigt die optisch-geometrischen Beziehungen dieses Teilnehmergerätes 15 für eine Ausführung mit einer Videokamera 10, deren Objektiv z.B. eine Brennweite von 12 mm und einen Bildwinkel von 37° hat. Der Spiegel 3 hat eine Größe von 20 x 16 cm. Bei einem Abstand a von 95 cm ist ein Benutzer B in einer günstigen Entfernung von der virtuellen Kamera VK, deren optische Achse KA eine Neigung von δ = 3° über der Horizontalen hat. Die ergonomische optimale Blickneigung (Linie AA) von γ = 15° ergibt sich für einen Betrachter B, dessen Augen etwa 45 cm hoch über dem Tisch T sind, auf dem das Teilnehmergerät 15 steht, wenn sich die Unterkante der Bildwiedergabevorrichtung 9 etwa 13 cm über dem Tisch befindet. Der Fehlwinkel beträgt dann 8° und liegt damit noch in dem Winkelbereich, in dem die Abweichung vom direkten Blickkontakt noch nicht störend empfunden wird. Der Neigungsunterschied der beiden optischen Achsen AA und KA ergibt sich zu α = 12°. Die Linie AB von den Augen des Benutzers B zur virtuellen Kamera VK ist um den Winkel β gleich 7° geneigt.

Bei Aufbau von Kamera und Monitor sind, relativiert nach jeweiligem Schwerpunkt, folgende Vorteile nutzbar: Bei stärkerem Licht kann die Schärfentiefe der Kamera durch die Wahl kleinerer Blenden erhöht, bzw. das Licht der Arbeitsplatzbeleuchtung für den Benutzer angenehm reduziert werden. Der Einfluß von Fremdlicht ist wesentlich weniger störend, das Monitorbild hat die bestmögliche Brillanz, ggf. noch verstärkt mit einem üblichen Kontrastfilter. Ist die Kamera mit einer CCD-Blende (charged coupled device) ausgestattet, kann trotzdem mit einer zusätzlichen, manuell bedienten Irisblende die Schärfentiefe wunschgemäß voreingestellt werden. Nur bei extrem wenig Licht muß diese Blende manuell oder ferngesteuert bzw. automatisch weiter geöffnet werden.

Dieses Prinzip eignet sich auch hervorragend zur Integration in ein "Bildtelefon-Window" auf einem großen Multimedia-Bildschirm, denn die Kamera läßt sich leicht über den Spiegel auf die dem Window entsprechende Stelle ausrichten.

Um die Umkehrwirkung einer einmaligen Spiegelung wieder aufzuheben, wird entweder der Videokamera 10 ein weiterer, kleiner Spiegel (nicht dargestellt) vorgesetzt oder das aufgenommene Bild wird elektronisch gewendet, z.B. im Codec oder an der Bildwiedergabevorrichtung 9, so daß es seiten richtig auf dem Bildschirm erscheint. Steht eine Videokamera zur Verfügung, die zwischen Spiegelbild und Normalbild umschaltbar ist, erübrigen sich die genannten Maßnahmen.

## Patentansprüche

1. Teilnehmergerät für Bildfernsprechen mit einem Gehäuse zur Aufnahme von Schaltung sowie Bedien- und Anzeigeelementen, mit einer Videokamera, einer Bildwiedergabevorrichtung und einem einstellbaren Spiegel, der den Strahlengang der Videokamera zu einem Benutzer umlenkt, dadurch gekennzeichnet, daß die benutzernahe Bildwiedergabevorrichtung (9) nach hinten geneigt über dem Gehäuse (16) angebracht und an ihrer Oberkante eine Klappe (20) angelenkt ist, die auf ihrer Innenseite den Spiegel (3) trägt, und daß die Videokamera (10) im Gehäuse (16) sitzt und über den Spiegel (3) auf den Benutzer (B) ausgerichtet ist.

2. Teilnehmergerät nach Anspruch 1, dadurch gekennzeichnet, daß bei einer Entfernung (a) vom Benutzer (B) zur virtuellen Kamera (VK) von 95 cm die Blickkontaktlinie (AA) von den Augen eines Benutzers (B) zu denen eines Gesprächspartners (P) auf der Bildwiedergabevorrichtung (9) unter einem Winkel (γ) von 15°, die Blicklinie von den Augen des Benutzers (B) zur virtuellen Kamera (VK) um einen Winkel (β) von 7° und die optische Achse der virtuellen Kamera (VK) um einen Winkel (δ) von ca. 3° jeweils gegen die Horizontale geneigt ist.

3. Teilnehmergerät nach Anspruch 1, dadurch gekennzeichnet, daß zur Erzeugung eines seitenrichtigen Bildes ein weiterer Spiegel vor die Videokamera (10) gesetzt ist.

4. Teilnehmergerät nach Anspruch 1, dadurch gekennzeichnet, daß das von der Videokamera (10) aufgenommene Bild elektronisch seitengewendet wird.

5. Teilnehmergerät nach Anspruch4, dadurch gekennzeichnet, daß die Videokamera (10) zwischen Spiegel und Normalbild umschaltbar ist.

## Claims

1. Subscriber videophone device with a casing for receiving circuit and also operating and display elements, comprising a video camera, a picture reproduction device and an adjustable mirror which deflects the beam path of the video camera to a user, characterized in that the picture reproduction device (9) close to the user is mounted so as to be inclined backwards over the casing (16), and a flap (20) which carries a mirror (3) on its inner side is linked to its upper edge, and in that the video camera (10) sits in the casing (16) and is aimed at the user (B) via the mirror (3).

2. Subscriber device according to Claim 1, characterized in that, given a distance (a) from the user (B) to the virtual camera (VK) of 95 cm, the visual contact line (AA) from the eyes of a user (B) to those of a call partner (P) on the picture reproduction device (9) is inclined at an angle (γ) of 15°, the visual line from the eyes of the user (B) to the virtual camera (VK) is inclined at an angle (β) of 7° and the optical axis of the virtual camera (VK) is inclined at an angle (δ) of approximately 3°, respectively, with respect to the horizontal.

3. Subscriber device according to Claim 1, characterized in that a further mirror is placed in front of the video camera (10) to produce a laterally correct picture.

4. Subscriber device according to Claim 1, characterized in that the picture recorded by the video camera (10) is electronically laterally reversed.

5. Subscriber device according to Claim 4, characterized in that the video camera (10) can be switched between mirror and normal picture.

## Revendications

1. Poste d'abonné pour vidéophonie comprenant un boîtier destiné à recevoir le circuit, ainsi que les éléments de commande et d'affichage, une caméra vidéo, un dispositif de reproduction d'image et un miroir réglable, qui renvoie vers un utilisateur le faisceau de rayons émis par la caméra vidéo, caractérisé en ce que le dispositif de reproduction d'image (9) à proximité de l'utilisateur est monté au-dessus du boîtier (16) de manière inclinée vers l'arrière et porte de manière articulée sur son bord supérieur un clapet (20) dont la face intérieure est munie du miroir (3), et en ce que la caméra vidéo (10) est posée dans le boîtier (16) et est orientée par l'intermédiaire du miroir (3) sur l'utilisateur (B).

2. Poste d'abonné selon la revendication 1, caractérisé en ce que, si la distance (a) entre l'utilisateur (B) et la caméra virtuelle (VK) est égale à 95 cm, l'axe du contact de vue (AA) entre les yeux d'un utilisateur (B) et ceux d'un correspondant (P) sur le dispositif de reproduction d'image (9) est incliné selon un angle (γ) de 15°, l'axe de vue entre les yeux de l'utilisateur (B) et la caméra virtuelle (VK) est incliné selon un angle (β) de 7° et l'axe optique de la caméra virtuelle (VK) est incliné selon un angle (δ) de respectivement 3° par rapport à l'horizontale.

3. Poste d'abonné selon la revendication 1, caractérisé en ce qu'un miroir supplémentaire est posé devant la caméra vidéo (10) pour générer une image à l'endroit.

4. Poste d'abonné selon la revendication 1, caractérisé en ce que l'image enregistrée par la caméra vidéo (10) est inversée par voie électronique.

5. Poste d'abonné selon la revendication 4, caractérisé en ce que la caméra vidéo (10) peut être commandée dans deux positions : image inversée et image normale.
